Europäisches Patentamt

**European Patent Office**

**Office européen des brevets**

(11) Veröffentlichungsnummer: **0 081 723**
**A1**

(12) **EUROPÄISCHE PATENTANMELDUNG**

(21) Anmeldenummer: **82110951.9**

(22) Anmeldetag: **26.11.82**

(51) Int. Cl.³: **H 02 M 5/27**, H 02 P 13/30

(30) Priorität: **26.11.81 JP 188418/81**

(43) Veröffentlichungstag der Anmeldung: **22.06.83**
**Patentblatt 83/25**

(84) Benannte Vertragsstaaten: **AT CH DE FR GB IT LI SE**

(71) Anmelder: **FUJI ELECTRIC CO. LTD., 1-1,**
**Tanabeshinden, Kawasaki-ku, Kawasaki 210 (JP)**

(72) Erfinder: **Osawa, Hiroshi, Dipl.-Ing., 1-20-1, Nishikata**
**Bunkyo-ku, Tokyo (JP)**
Erfinder: **Endo, Kazuya, Ochiaiso 1-18-16, Sakae-machl,**
**Hino-shi Tokyo (JP)**

(74) Vertreter: **Mehl, Ernst, Dipl.-Ing. et al, Postfach 22 01 76,**
**D-8000 München 22 (DE)**

(54) **Vorrichtung zur Steuerung der Ausgangsspannung eines mehrphasigen Direktumrichters.**

㉝ Die Erfindung betrifft eine Vorrichtung zur Steuerung der Spannung am Ausgang eines mehrphasigen Direktumrichters, an den eine Last, beispielsweise ein Drehfeldmotor (3), angeschlossen ist. Zur Verbesserung des Leistungsfaktors ist der Bezugspunkt (A) des Direktumrichters elektrisch vom Bezugspunkt (B) der Last (3) getrennt. Mit einem Funktionsgeber (6a) wird ein der Ausgangsspannung proportionales Gleichspannungssignal vorgegebener Größe erzeugt, wenn die Ausgangsspannung einen vorgegebenen Wert unterschreitet. In Addierstufen (6) wird das Gleichspannungssignal den sinusförmigen Steuersignalen jeder Phase zugefügt, die an den Steuereingängen der Steuersätze (51–53) für die Stromrichterventile des Direktumrichters anstehen.

FUJI ELECTRIC CO., LTD.          Mein Zeichen
Kawasaki / Japan                 VPA 81 P 8614 E


Vorrichtung zur Steuerung der Ausgangsspannung eines
mehrphasigen Direktumrichters
(Es wird die Priorität aus der japanischen Anmeldung
T 56-188418 vom 26.11.1981 beansprucht)


Die Erfindung betrifft eine Vorrichtung zur Steuerung
der Spannung am Ausgang eines mehrphasigen Direktumrichters, an dem eine Last angeschlossen ist.

Direktumrichter werden im allgemeinen benötigt um:
1. Unerwünschte hochfrequente Ströme für eine Last so
   klein wie möglich zu halten und
2. einen guten Leistungsfaktor am Umrichtereingang zu
   erzielen.

Der Leistungsfaktor am Eingang eines fremdgeführten Leistungsumrichters ändert sich etwa mit seinem Steuerwinkel,
d.h. seiner Ausgangsspannung. Insbesondere bei einer
Last, die eine entgegengerichtete, elektromotorische
Kraft erzeugt, beispielsweise bei einem Motor, ist der
Eingangsleistungsfaktor dann äußerst verschlechtert,
wenn die Gegen-EMK klein ist, d.h. bei Betrieb mit kleiner Geschwindigkeit. Dies gilt grundsätzlich auch, wenn
der Umrichter eine sinusförmige Spannung abgibt. Bei
kleiner Ausgangsspannung, die man gewöhnlich mit einem
Steuerwinkel für jede Phase nahe $90^{o}$ el erhält, kann
demnach die Verminderung des netzseitigen Leistungsfaktors dadurch weitgehend ausgeglichen werden, daß in
jeder Phase eine Gleichspannung der Ausgangsspannung
hinzugefügt wird, d.h., daß der Umrichter in einem Bereich betrieben wird, in dem sich der Steuerwinkel näher
bei Null oder $180^{o}$ el befindet.

Soe 2 Bim / 24.11.1982

Falls jedoch die Gleichspannungskomponente an einer Last liegt, deren Bezugspunkt mit dem Bezugspunkt des Umrichters verbunden ist, so resultieren aus dem Nullphasenstrom einerseits unerwünschte Wirkungen in der Last, andererseits können Bauelemente des Umrichters zerstört werden.

Es besteht die Aufgabe, einen Umrichter der eingangs genannten Art so auszubilden, daß bei Ausschaltung der Gefahr von Betriebsstörungen der Leistungsfaktor verbessert wird.

Erfindungsgemäß wird diese Aufgabe dadurch gelöst, daß der Bezugspunkt des Direktumrichters elektrisch vom Bezugspunkt der Last getrennt ist, daß ein Geber vorgesehen ist, der ein Gleichspannungssignal vorgegebener Größe abgibt, wenn die Ausgangsspannung einen vorgegebenen Wert unterschreitet und daß in Addierstufen das Gleichspannungssignal den sinusförmigen Steuersignalen jeder Phase zufügbar ist, die an den Steuereingängen des Steuersatzes für die Stromrichterventile des Direktumrichters anstehen.

Durch die fehlende elektrische Verbindung zwischen den Bezugspunkten der Last und des Umrichters werden die oben erwähnten Probleme vermieden. Mit der jeder Phase der Ausgangsspannung überlagerten Gleichspannungskomponente wird dabei der netzseitige Leistungsfaktor verbessert.

Vorzugsweise gibt der Geber ein der Ausgangsspannung proportionales Gleichspannungssignal ab.

Im folgenden wird die Erfindung anhand der Figuren 1 bis 5 näher erläutert.

Figur 1 zeigt das Schaltbild eines erfindungsgemäße Direktumrichters.

Die Figuren 2 und 4 sind Diagramme von Spannung und Strom jeder Phase a bis c am Ausgang eines herkömmlichen (Figur 2) und eines erfindungsgemäß (Figur 4) ausgebildeten Umrichters.

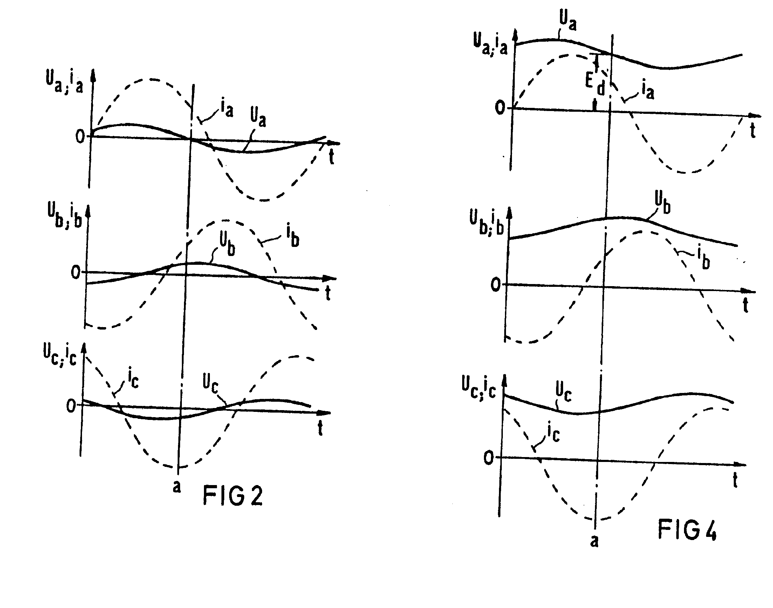

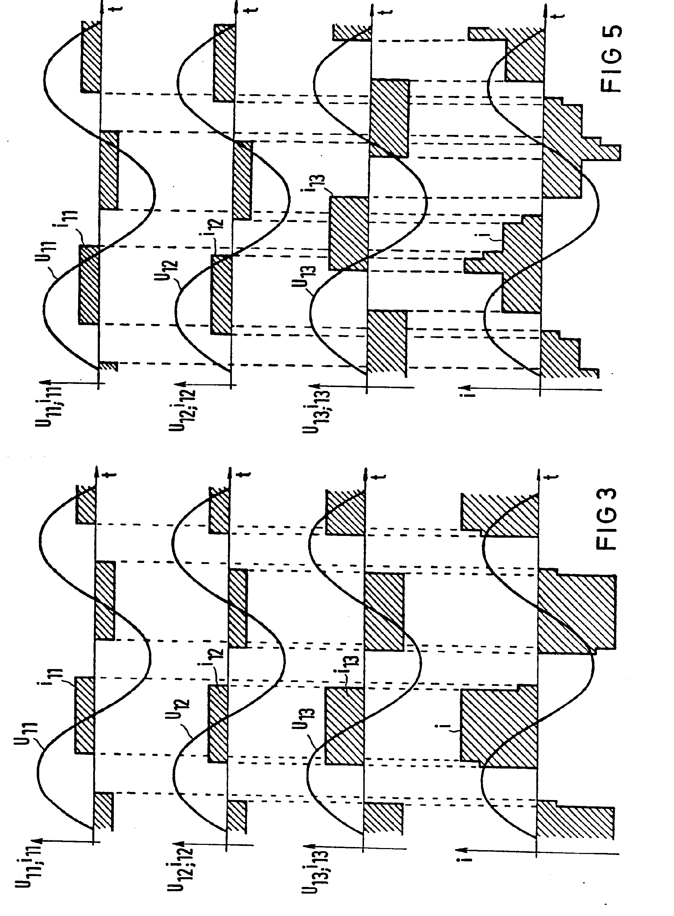

In den Diagrammen der Figuren 3 bzw. 5 werden die Spannungen und Ströme der gleichen Netzphase im Bereich $\underline{a}$ der Figur 2 bzw. 4 gezeigt.

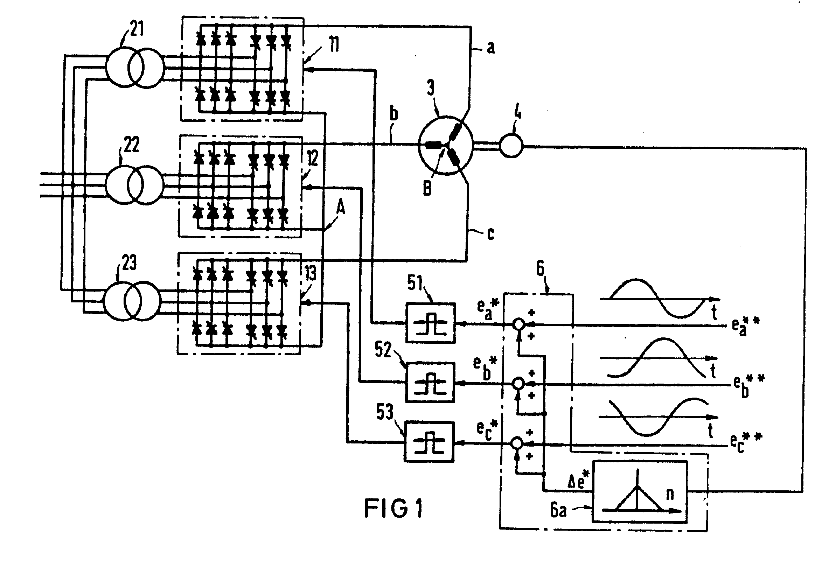

Im Ausführungsbeispiel nach Figur 1 ist der Sternpunkt A des Umrichters und der Sternpunkt B der Last nicht miteinander verbunden. Das Schaltbild zeigt die Umkehrstromrichter 11, 12 und 13 des Direktumrichters, die Netztransformatoren 21, 22 und 23, die Last 3, die beispielsweise ein Drehfeldmotor, insbesondere auch ein Asynchronmotor sein kann, einen Drehzahlgeber 4, der die der Ausgangsspannung proportionale Drehzahl des Motors 3 feststellt und Steuersätze 51, 52 und 53 mit denen die Zündwinkel für die Stromrichterventile des Umrichters verändert werden können. Bei diesem Ausführungsbeispiel ist Proportionalität zwischen den den Steuereingängen der Steuersätze 51 bis 53 zugeführten Steuersignalen und der Ausgangsspannung des Umrichters festgelegt. Um zu vermeiden, daß dem Motor Strom mit unerwünschtem Oberschwingungsgehalt zufließt, werden den Steuereingängen der Steuersätze für jede der drei Phasen a bis c phasenrichtige Steuersignale ea**, eb** und ec** zugeführt. In einem Geber 6 für einen Hilfsspannungswert wird mit einem Funktionsgenerator 6a eine Gleichspannung $\triangle$ e* gemäß der Gleichung (1) in Abhängigkeit von dem Signal n des Drehzahlgebers erzeugt.

$$\triangle e^* = 0 \qquad (|n| > n_o)$$
$$\triangle e^* = k \cdot (n_o - |n|) \qquad (|n| \leqslant n_o) \qquad\qquad (1)$$

Worin $n_o$ eine vorgegebene Geschwindigkeit (die beispielsweise die Höchstgeschwindigkeit sein kann) und k ein Proportionalitätsfaktor ist. Die so erhaltene Kompensationsspannung $\Delta e*$ wird zu den Steuersignalen ea**, eb**, ec** jeweils addiert oder von diesen subtrahiert, womit man die wirklichen Steuersignale ea*, eb* und ec* für jede Phase erhält. Da wie oben beschrieben die Zwischenspannung für jede der drei Phasen sich durch das Zufügen der konstanten Gleichspannung zur Spannung jeder der Phasen nicht ändert und da der Sternpunkt A des Umrichters und der Sternpunkt B der Last nicht miteinander verbunden sind, fließt kein unerwünschter Nullphasenstrom der Last zu, der von der Gleichspannung hervorgerufen wird.

Im folgenden wird auf die ventilseitigen Spannungen und Ströme und auf den netzseitigen Spannungs- und Stromverlauf bei herkömmlichen Umrichtern und bei einem erfindungsgemäß ausgebildeten Umrichter näher eingegangen.

Die Diagramme der Figuren 2 und 4 zeigen die ventilseitigen Sternspannungen $U_a$, $U_b$ und $U_c$ und Ströme $i_a$, $i_b$ und $i_c$, wobei Figur 2 diese Größen für herkömmliche Umrichter und Figur 4 für die erfindungsgemäße Vorrichtung enthält. In den Zeichnungen sind harmonische Komponenten infolge der Welligkeit aus der Gleichrichtung weggelassen. Die Diagramme der Figur 3 und 5 zeigen die netzseitigen Spannungen $U_{11}$, $U_{12}$ und $U_{13}$ und die Ströme $i_{11}$, $i_{12}$ und $i_{13}$ der gleichen Netzphase für jeden der Umkehrstromrichter 11, 12 und 13 und den zusammengesetzten Strom in jedem Bereich a der Figur 2 und 4. Gemäß Figur 4 werden mit dem erfindungsgemäßen Umrichter Spannungen erhalten, die sich aus einem vorgegebenen Gleichspannungswert Ed und Wechselspannungskomponenten zusammensetzen.

Für die Diskussion des Leistungsfaktors, den man mit und ohne die den Steuersignalen überlagerte Hilfsspannung erhält, sei vorausgesetzt, daß die Ausgangsfrequenz wesentlich kleiner als die Frequenz der Versorgungsspannung sei. Nach Figur 3 erhält man den Strom i im wesentlichen aus Addition der Ströme $i_{11}$ bis $i_{13}$. Da der Betrieb für jeden der Umkehrstromrichter 11, 12 und 13 mit einem Steuerwinkel nahe $90^o$ el. erfolgt, errechnet sich für die Grundwelle der Leistungsfaktor von ungefähr 0,06 bei einem Lastleistungsfaktorwinkel von $30^o$ und einem Steuerwinkel von $85^o$ el. Andererseits ist nach Figur 5 ein motorischer Betrieb (Steuerwinkel $< 90^o$ el.) und ein generatorischer Betrieb (Steuerwinkel $< 90^o$ el.) immer zusammen vorhanden. Die entsprechenden Steuerwinkel liegen nahe bei Null oder $180^o$ el. Der zusammengesetzte Strom i ist eine Treppenkurve und bedeutet einen kleineren Netzstrom, da Wirkströme in den Umrichter und das Netz zurückgespeist werden. Demgemäß besitzt der unbenützte Wirkstrom der Vorrichtung einen kleineren Wert, als in dem in Figur 2 gezeigten Fall. Nimmt man beispielsweise an, daß der Steuerwinkel von $90^o$ el. in Figur 2 dem Steuerwinkel von $30^o$ el. in Figur 4 entspricht, dann ergibt sich für die Grundwelle rechnerisch ein Leistungsfaktor von etwa 0,11. Das bedeutet, daß der Leistungsfaktor der Grundwelle von 0,06 auf 0,11 ansteigt. Betrachtet man den zurückgespeisten Strom, so ist das Verhältnis zwischen zurückgespeistem Strom und Wirkstrom gegeben mit:

$$\sqrt{1 - 0.06^2}/0.06 = 1.7$$

im Fall der Figur 2 und mit:

$$\sqrt{1 - 0.11^2}/0.11 = 9$$

im Fall der Figur 4. Da der Wirkstrom beim Betrieb nach Figur 2 und bei Betrieb nach Figur 4 gleich bleibt, ist der zurückgespeiste Strom um den Faktor 1/2 reduziert. Falls der Laststrom und der Leistungsfaktor der Last konstant sind, wächst der zurückgespeiste Strom des Umrichters bei Verkleinerung der Ausgangsspannung. Demgemäß bedeutet die Verringerung des zurückgespeisten Stromes im Fall einer kleinen Ausgangsspannung einen großen Vorteil, beispielsweise in Hinblick auf Kondensatoren oder ähnliche Bauelemente, mit denen der Leistungsfaktor verbessert wird. Es können allerdings auch häufig Nachteile auftreten, falls die jeweiligen Ausgangsleistungen in Figur 2 und 4 unterschiedlich sind. Da die Ausgangsleistung P in Figur 4 mit der Hilfsspannung $\Delta$ e nichts zu tun hat, wie im folgenden Gleichungssystem (2) gezeigt wird, bleibt die Ausgangsleistung ungeändert:

$$P = (\sqrt{2}\, E \sin \Theta + \Delta e) \times \sqrt{2}\, I \sin (\Theta - \varphi) \qquad (2)$$

$$+ (\sqrt{2}\, E \sin (\Theta - \tfrac{2}{3}\pi) + \Delta e) \times \sqrt{2}\, I \sin (\Theta - \tfrac{2}{3}\pi - \varphi)$$

$$+ (\sqrt{2}\, E \sin (\Theta + \tfrac{2}{3}\pi) + \Delta e) \times \sqrt{2}\, I \sin (\Theta + \tfrac{2}{3}\pi - \varphi)$$

$$= \sqrt{2}\, E \sin \Theta \times \sqrt{2}\, I \sin (\Theta - \varphi)$$

$$+ \sqrt{2}\, E \sin (\Theta - \tfrac{2}{3}\pi) \times \sqrt{2}\, I \sin (\Theta - \tfrac{2}{3}\pi - \varphi)$$

$$+ \sqrt{2}\, E \sin (\Theta + \tfrac{2}{3}\pi) \times \sqrt{2}\, I \sin (\Theta + \tfrac{2}{3}\pi - \varphi)$$

$$= 3\, E\, I \cos \varphi$$

worin E der Effektivwert der Ausgangswechselspannungskomponente, I der Effektivwert des Ausgangsstromes, $\Delta$ e die Hilfsspannung und $\varphi$ der Winkel des Leistungsfaktors für die Last ist.

Zusammengefaßt wird bei einem mehrphasigen Direktumrichter, desen Bezugspunkt mit dem Bezugpunkt der Last nicht verbunden ist, der Leistungsfaktor für den Fall verbessert, daß die Ausgangsspannung kleiner als eine vorgegebene, beispielsweise maximale Ausgangsspannung ist. Dies wird dadurch erreicht, daß man die Ausgangsspannung jeder Phase dadurch auf einen Spannungswert steuert, daß man eine konstante Gleichspannungskomponente zu der gewünschten Wechselspannung addiert. Dabei wird der Umrichter in einem Zustand betrieben, wo seine Steuerwinkel näher Null oder 180$^{\circ}$ el. liegen und der Eingangsleistungsfaktor zufriedenstellend ist.

Zusätzlich erhält man mit der Erfindung einen großen Vorteil, wenn der elektrische Strom in eine Last eingespeist wird, die eine Gegen-EMK erzeugt, beispielsweise in einem Motor, der ein Asynchron- oder ein Synchronmotor sein kann. Ähnliche Vorteile erhält man bei anderen Lasten, beispielsweise LR-Lasten. Außerdem ist die Anwendung nicht auf dreiphasige Lasten beschränkt, sondern kann bei jeder anderen mehrphasigen Last angewendet werden.

2 Patentansprüche
5 Figuren

- 8 -     VPA 81 P 8614 E

1. Vorrichtung zur Steuerung der Spannung am Ausgang eines mehrphasigen Direktumrichters, an den eine Last angeschlossen ist, d a d u r c h   g e k e n n - z e i c h n e t ,   daß der Bezugspunkt (A) des Direktumrichters elektrisch vom Bezugspunkt (B) der Last (3) getrennt ist, daß ein Geber (6) vorgesehen ist, der ein der Ausgangsspannung proportionales Gleichspannungssignal vorgegebener Größe abgibt, wenn die Ausgangsspannung einen vorgegebenen Wert unterschreitet und daß in Addierstufen das Gleichspannungssignal den sinusförmigen Steuersignalen jeder Phase zufügbar ist, die an den Steuereingängen der Steuersätze (51, 52, 53) für die Stromrichterventile des Direktumrichters anstehen.

2. Vorrichtung nach Anspruch 1, d a d u r c h   g e k e n n z e i c h n e t ,   daß der Geber (6) ein der Ausgangsspannung proportionales Gleichspannungs- signal abgibt.

FIG 1

FIG 4

FIG 2

FIG 3

FIG 5

81 P 8614

0081723

Europäisches
Patentamt

**EUROPÄISCHER RECHERCHENBERICHT**

0081723

Nummer der Anmeldung

EP  82 11 0951

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|-----------|---------------------------------------------------------------|--------|-----------------|
| | --- | | H 02 M    5/27 |
| X | DE-A-2 945 145  (LICENTIA) <br> * Gesamte Schrift * | 1,2 | H 02 P   13/30 |
| | --- | | |
| Y | DE-C-2 641 294  (SIEMENS) <br> *  Spalte 6, Zeile 15 - Spalte 8, <br> Zeile 28 * | 1,2 | |
| | --- | | |
| Y | DE-A-2 502 513  (SIEMENS) <br> * Seite 2, letzter Absatz - Seite <br> 4, Absatz 1 * | 1,2 | |
| | --- | | |
| P | DE-A-3 029 311  (SIEMENS) <br> *  Anspruch  1  in Verbindung mit <br> Seite 8, Zeile 19, und folgende * | 1,2 | |
| | --- | | RECHERCHIERTE SACHGEBIETE (Int. Cl. ³) |
| P | EP-A-0 045 440  (SIEMENS) <br> * Patentanspruch * | 1,2 | |
| | ----- | | H 02 M    5/00 <br> H 02 P   13/30 |

Der vorliegende Recherchenbericht wurde für alle Patentansprüche erstellt.

| Recherchenort <br> BERLIN | Abschlußdatum der Recherche <br> 17-02-1983 | Prüfer <br> GESSNER E A F |
|---|---|---|

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503. 03.82